# EUROPEAN PATENT SPECIFICATION

(11) **EP 1 939 890 B1**
(45) Date of publication and mention of the grant of the patent: **02.05.2012**
(21) Application number: 07255058.5
(22) Date of filing: 27.12.2007
(51) Int. Cl.: G21C 7/20, F16F 9/18, F16F 9/48

(54) **Apparatus for falling-shock absorption of control rod of nuclear reactor**
Vorrichtung zur Fallabsorption eines Steuerstabes in einem Kernkraftreaktor
Appareil pour l'absorption des chocs de barre de contrôle d'un réacteur nucléaire

(30) Priority: 28.12.2006 KR 20060136677
(43) Date of publication of application: 02.07.2008
(73) Proprietor: Korea Atomic Energy Research Institute, Daejeon 305-353 (KR)
(72) Inventor: Cho, Yeong, Garp, Yuseong-gu, Daejeon (KR); Ryu, Jeong, Soo, Yuseong-gu, Daejeon (KR)
(74) Representative: Mounteney, Simon James

(56) References cited:
- US-A- 4 082 610
- US-A- 4 323 427
- US-A- 4 826 648
- US-A- 4 961 897

## Description

### BACKGROUND OF THE INVENTION

### Field of the Invention

The present invention relates to an apparatus for drop impact absorption of a control rod of a nuclear reactor, and more particularly, to an apparatus for drop impact absorption of a control rod of a nuclear reactor that can maintain the appropriate drop speed during the free drop of the control rod to quickly stop the operation of the nuclear reactor, and can reduce the drop impact of the control rod that occurs at the last stage when the control rod drops.

### Description of the Related Art

In general, in a nuclear reactor, reactivity of nuclear fuel is controlled by inserting or removing a control rod from the core of the nuclear reactor.

The control rod that is inserted into the core of the reactor has a rod or tube, or plate shape and is made of boron, cadmium, hafnium, or the like, in order to absorb thermal neutrons that engage in combustion of the nuclear fuel (a nuclear fission reaction).

When the control rod having the above construction is inserted into the core of the nuclear reactor, the reactivity of the nuclear reactor is reduced due to absorption of the thermal neutrons. On the other hand, when the control rod is removed from the core of the nuclear reactor, the reactivity of the nuclear reactor is increased.

When such control rods are classified according to function, shim rods are roughly established to increase output of the nuclear reactor by a desired value, operation rods are used for fine control of the nuclear reactor to maintain a desired output of the nuclear reactor. The control rods are inserted into the core of the nuclear rod to stop the operation when an erroneous operation occurs, or when the reactor is to be shutdowned by a schedule.

At this time, the control rod is driven by a driving motor or an air cylinder using compressed air, and operates by remote control from a control room that is located distant from the core of the nuclear reactor by a predetermined distance.

When the nuclear reactor stops its operation, the control rod drops free so as to be quickly inserted into the core of the nuclear reactor. The control rod may be subject to structural damage caused due to the drop impact during the free drop of the control rod. Further, in terms of maintenance, a life time of the control rod is reduced due to the accumulated impacts.
US 4,082,610A, US 4,961,897A, US 4,826,648A and US 4,323,427A each disclose a respective shock absorbing device for use with a control rod in a nuclear reactor.

### SUMMARY OF THE INVENTION

An aspect of the present invention provides an apparatus for drop impact absorption of a control rod of a nuclear reactor that can maintain the appropriate drop speed during the free drop of the control rod to quickly stop the operation of the nuclear reactor, and can reduce the drop impact of the control rod that occurs at the last stage when the control rod drops.

According to an aspect of the present invention, there is provided an apparatus for absorbing a drop impact upon a control rod of a nuclear reactor as set out in Claim 1.
Preferred features of the invention are set out in Claims 2 to 6.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a schematic view illustrating an apparatus for drop impact absorption of a control rod of a nuclear reactor according to an exemplary embodiment of the present invention.

FIG. 2 is an exploded perspective view illustrating a main piston and a piston rod fixedly installed at a impact absorbing piston while the piston rod passes through the impact absorbing piston in the apparatus for drop impact absorption of a control rod of a nuclear reactor shown in FIG. 1.

FIG. 3 is a cross-sectional view illustrating the apparatus for drop impact absorption of a control rod of a nuclear reactor shown in FIG. 2.

FIG. 4 is a cross-sectional view illustrating a impact absorbing unit of the apparatus for drop impact absorption of a control rod of a nuclear reactor shown in FIG. 1.

FIG. 5 is a cross-sectional view illustrating the drop of a impact absorbing piston in response to the drop of the piston rod in the impact absorbing unit shown in FIG. 4.

### DETAILED DESCRIPTION OF THE PREFERRED EMBODIMENT

Exemplary embodiments of the present invention will now be described in detail with reference to the accompanying drawings.

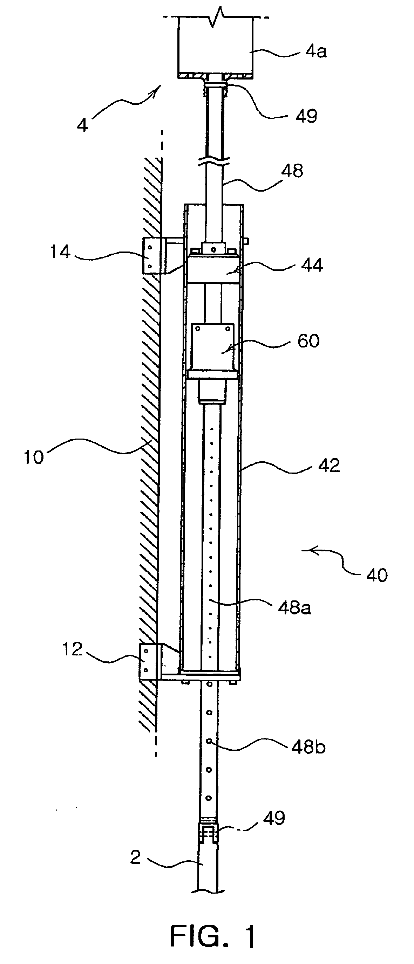

FIG. 1 is a schematic view illustrating an apparatus for drop impact absorption of a control rod of a nuclear reactor according to an exemplary embodiment of the present invention.

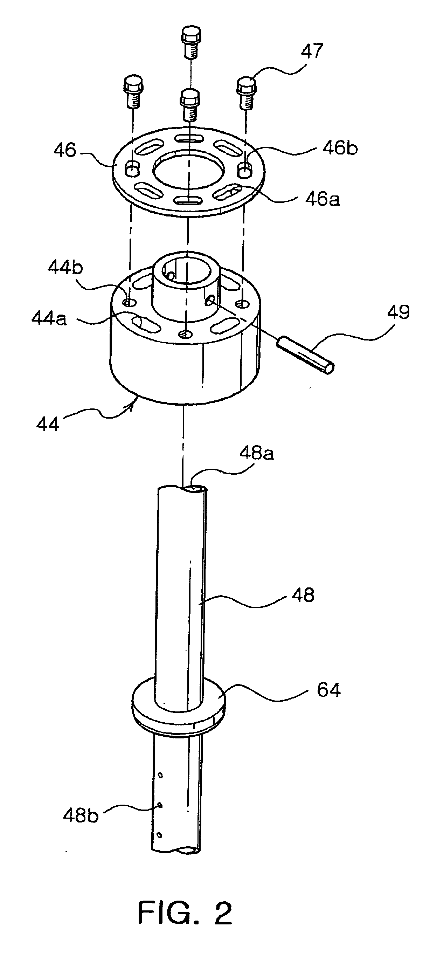

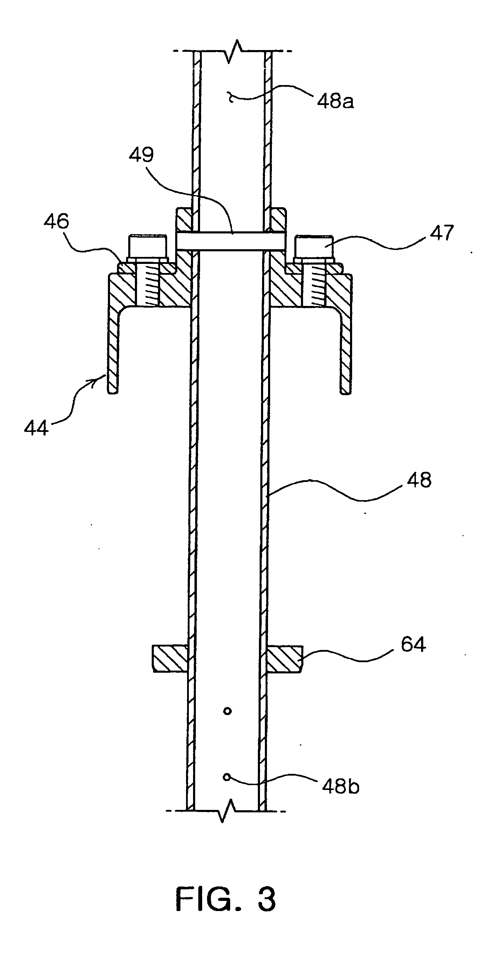

FIG. 2 is an exploded perspective view illustrating a main piston and a piston rod fixedly installed at a impact absorbing piston while the piston rod passes through the impact absorbing piston in the apparatus for drop impact absorption of a control rod of a nuclear reactor shown in FIG. 1. FIG. 3 is a cross-sectional view illustrating the apparatus for drop impact absorption of a control rod of a nuclear reactor shown in FIG. 2.

Referring to FIGS. 1 to 3, the apparatus for drop impact absorption of a control rod of a nuclear reactor according to the embodiment of the invention is entirely disposed in water of the nuclear reactor. The apparatus includes a fixed frame 10 and a impact absorbing device 40 that is installed at the fixed frame 10.

The fixed frame 10 is connected by installation of a control rod 2 and disposed at an upper side of the core of the nuclear reactor. In order that the control rod 2 can be inserted into the core of the nuclear reactor at a desired position, the fixed frame 10 is fixed and installed at the upper side of the core of the nuclear reactor at an appropriate position where the control rod 2 moves up and down so as to be inserted or removed from the core of the nuclear reactor.

The impact absorbing device 40 is installed at the fixed frame 10. During the free drop of the control rod 2 mounted to a lower part of the impact absorbing device 40 to insert the control rod 2 into the core of the nuclear reactor, the impact absorbing device 40 reduces the drop impact of the control rod 2.

The impact absorbing device 40 having the above construction includes a main cylinder 42, a main piston 44 disposed inside the main cylinder 42, and a piston rod 48 fixed while passing through the main piston 44.

At this time, the main cylinder 42 has a large length in a vertical direction. The main cylinder 42 has an opened top surface and an internal space in a longitudinal direction. The main piston 44 and the piston rod 48 that passes through a closed bottom surface are disposed in the internal space. Here, water flows in or out through the opened top surface of the main cylinder 42.

The main cylinder 42 having the above construction is fixed to the fixed frame 10. Here, the main cylinder 42 is connected by a lower holder 12 and an upper supporter 14, and is fixedly installed at the fixed frame 10.

Here, a lower part of the main cylinder 42 is placed and fixed to the lower holder 12. Further, the upper supporter 14 guides and supports the main cylinder 42 so that the main cylinder 42 stands in a vertical direction. A member having a circular hole or a circular ring member having one open side may be used as the upper supporter 14, and the main cylinder 42 passes through the used member.

The main piston 44 is disposed inside the main cylinder 42 and can move up and down with respect to the main cylinder 42. Further, the piston rod 48 is fixed while the piston rod 48 passes through the center of the main piston 44. That is, the piston rod 48 passes through the main piston 44 and has a large length. Further, the piston rod 48 is fixed and installed at the main piston 44 by a coupling pin 49.

At this time, the main piston 44 has a smaller inner circumferential diameter than the main cylinder 42 such that the main piston 44 can move up and down with respect to the main cylinder 42. Here, a gap is formed between the main piston 44 and the main cylinder 42. Water flows through the gap.

As such, when the main piston 44 drops together during the drop free of the control rod 2, since a predetermined amount of water is discharged through the gap between the main piston 44 and the main cylinder 42, constant drop speed can be maintained to thereby reduce the drop impact of the control rod 2.

Further, for the flow control, the impact absorbing device 40 further includes piston holes 44a that are formed in the main piston 44 and a flow control member 46 that controls the opening or closing of the piston holes 44a.

At this time, one or more piston holes 44a are formed in the main piston 44 and disposed in a circumferential direction. The piston holes 44a enable circulation of water above and below the main piston 44. Here, each of the piston holes 44a has an arc shape along the circumferential direction of the main piston 44.

The flow control member 46 has flow control holes 46a corresponding to the piston holes 44a in order to control the opening and closing of the piston holes 44a. The flow control member 46 is rotatably connected to a top surface of the main piston 44.

That is, the flow control member 46 is in contact with the top surface of the main piston 44, and includes the flow control holes 46a that correspond to the piston holes 44a of the main piston 44 in terms of position. Further, each of the flow control holes 46a has an arc shape corresponding to each of the piston holes 44a.

Bolt holes 44b are formed in the main piston 44, and rotation holes 46b corresponding to the bolt holes 44b are formed in the flow control member 46. Coupling bolts 47 are inserted into the bolt holes 44b and the rotation holes 46b, such that the main piston 44 and the flow control member 46 are coupled to each other.

At this time, the rotation hole 46b of the flow control member 46 has an arc shape corresponding to the piston hole 44a. After the coupling bolts 47 are inserted, if the flow control member 46 rotates, the coupling bolt 47 moves along the rotation hole 46b by a predetermined distance.

In this way, the flow control member 46 can control the opening and closing of the piston holes 44a of the main piston 44.

The constructions of the main piston 44 and the flow control member 46 allow the control of water discharged through the piston holes 44a and the flow control holes 46a to thereby control the drop speed of the control rod 2. Further, during the free drop of the control rod 2, the drop impact of the control rod 2 can be reduced.

A control rod driving device 4 that includes a driving motor (not shown) for moving the control rod 2 up and down is connected to the piston rod 48. At this time, the piston rod 48 is coupled to a case 4a of the control rod driving device 4 by the coupling pin 49.

The piston rod 48 is fixed while passing through the main piston 44. The control rod 2 is coupled to a lower part of the piston rod 48 by the coupling pin 49. Through holes 48a are formed in the piston rod 48 along a longitudinal direction. Rod holes 48b that are formed in the piston rod 48 are separated by a predetermined distance along the longitudinal direction and communicate with the through holes 48a.

The inlet and discharge of water through the rod holes 48b will now be described.

When the control rod 2 drops, that is, when the piston rod 48 drops, water in the main cylinder 42 flows in the through holes 48a of the piston rod 48 through some of the rod holes 48b that are formed inside the main cylinder 42, and water accommodated through the through holes 48a of the piston rod 48 is discharged to the outside through other rod holes 48b that are formed outside the main cylinder 42.

At this time, preferably, the rod holes 48 that are formed at the lower part have a larger diameter than the rod holes 48 that are formed at the upper part so that water accommodated through the through holes 48a of the piston rod 48 can be quickly and easily discharged to the outside.

Since the rod holes 48b are formed in the piston rod 48, when the control rod 2 drops, that is, when the piston rod 48 drops, the number of rod holes 48b inside the main cylinder 42 is reduced to thereby control the drop speed of the control rod 2, and further reduce the drop impact of the control rod 2.

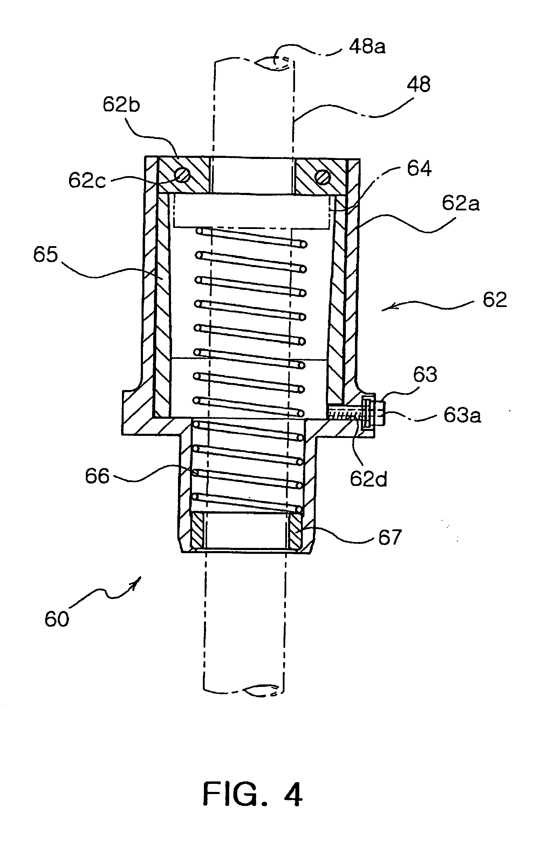

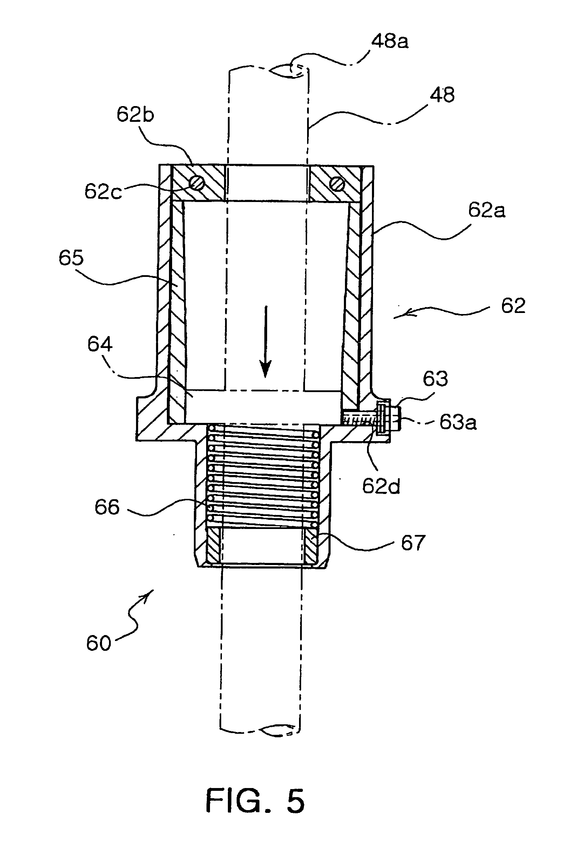

FIG. 4 is a cross-sectional view illustrating a impact absorbing device of the apparatus for drop impact absorption of a control rod of a nuclear reactor shown in FIG. 1. FIG. 5 is a cross-sectional view illustrating the drop of a impact absorbing piston in response to a piston rod in the impacting absorbing device shown in FIG. 4.

Referring to FIGS. 4 and 5, the impact absorbing device 40 further includes a impact absorbing unit 60 that is disposed below the main piston (refer to reference numeral 44 of FIG. 1) inside the main cylinder (refer to reference numeral 42 of FIG. 1). The impact absorbing unit 60 includes a impact absorbing cylinder 62 disposed inside the main cylinder 42, and a impact absorbing piston 64 disposed inside the impact absorbing cylinder 62.

The impact absorbing cylinder 62 includes a cylinder housing 62a and a cylinder cover 62b that is coupled to an upper portion the cylinder housing 62a by assembling pins 62c.

The impact absorbing cylinder 62 is disposed inside the main cylinder 42, penetrated by the piston rod 48, and has a larger outer circumferential diameter than the piston rod 48 so that the piston rod 48 can move up and down. Here, a gap is formed between the cylinder cover 62b of the impact absorbing cylinder 62 and the piston rod 48, and a predetermined amount of water flows through the gap.

Further, a discharge hole 62d is formed in one side of the cylinder housing 62a of the impact absorbing cylinder 62, and communicates with the outside.

A bolt 63 having a through hole 63a therein is engaged with the discharge hole 62d. The size of a flow path for water between the inside and the outside of the impact absorbing cylinder 62 can be controlled by changing the bolt 63 with a bolt having a through hole 63a with a different diameter, and engaging the bolt with the discharge hole 62d. In this way, the drop speed of the impact absorbing unit 60 that drops along the impact absorbing piston 64 can be controlled at a constant speed.

Further, the impact absorbing piston 64 is disposed in the impact absorbing cylinder 62, and the piston rod 48 is fixedly installed while passing trough the impact absorbing piston 64. At this time, a gap is formed between the impact absorbing piston 64 and the impact absorbing cylinder 62, and a predetermined amount of water flows through the gap.

Further, an elastic member 66 is installed between the impact absorbing piston 64 and a projection 62e that is formed at an inner lower portion of the cylinder housing 62a so as to provide an upward elastic force with respect to the impact absorbing piston 64. At this time, a bush 67 is mounted between the elastic member 66 and the projection 62e. The bush 67 is disposed between the piston rod 48 and the cylinder housing 62a to prevent abrasion of the cylinder housing 62a and guide and support the up and down motion of the piston rod 48.

The elastic member 66 elastically supports the impact absorbing piston 64 when the impact absorbing piston 64 drops to thereby contribute to the impact absorption of the impact absorbing unit 60.

The impact absorbing unit 60 further includes a cylinder liner 65 that covers the inside of the impact absorbing cylinder 62. The cylinder liner 65 is tapered so that it has a wider upper portion and a narrower lower portion.

In the impact absorbing unit 60, when the control rod 2 drops, that is, when the piston rod 48 drops, since the impact absorbing piston 64 drops with respect to the tapered cylinder liner 65 that has the wider upper portion and the narrower lower portion, an interval between the impact absorbing piston 64 and the cylinder liner 65 is reduced, which reduces the amount of water flowing out through the interval. This process is performed at the last stage when the control rod 2 drops, and at this time, the impact absorption with respect to the control rod 2 is increased.

A impact absorbing pad 68 is installed at an inner bottom surface of the main cylinder 42. The impact absorbing pad 68 reduces the drop impact when the impact absorbing cylinder 62 drops and collides with the inner bottom surface of the main cylinder 42.

As set forth above, according to exemplary embodiments of the invention, the apparatus for drop impact absorption of a control rod of a nuclear reactor includes a fixed frame disposed at an upper side of the core of the nuclear reactor, and a impact absorbing device installed at the fixed frame to reduce the drop impact of a control rod mounted at the lower part during the free drop of the control rod to be inserted into the core of the nuclear reactor. The apparatus having the above construction can maintain the appropriate drop speed during the free drop of the control rod to quickly stop the operation of the nuclear reactor, and reduce the drop impact of the control rod that occurs at the last stage when the control rod drops. Further, since structural loss and damage caused by the drop impact can be prevented, structural stability can be increased and a life span of the control rod can be extended.

While the present invention has been shown and described in connection with the exemplary embodiments, it will be apparent to those skilled in the art that modifications and variations can be made without departing from the scope of the invention as defined by the appended claims.

## Claims

1. An apparatus for drop impact absorption of a control rod of a nuclear reactor, the apparatus comprising:
a fixed frame (10) adapted to be disposed at an upper side of the core of the ' nuclear reactor; and
a impact absorbing device (40) installed at the fixed frame (10) for reducing the drop impact with aspect to a control rod (2) mounted at a lower part of the impact absorbing device (40) during a free drop of the control rod (2) to be inserted into the core of a nuclear reactor, wherein the impact absorbing device (40) comprises:
a vertical main cylinder (42) fixed to the fixed frame (10) and having an opened upper portion;
a main piston (44) disposed inside the main cylinder (42) and adapted to move up and down with respect to the main cylinder (42); and
a piston rod (48) fixed to and passing through the main piston (44), and having a lower part (49) at which the control rod (2) is mounted;
**characterised in that**
at least one piston hole (44a) is formed in the main piston (44) in a circumferential direction, and
the apparatus further comprises a flow control member (46) having a flow control hole (46a) corresponding to the piston hole (44a) in order to control the opening and closing of the piston hole (44a), the said flow control member (46) being rotatably connected to a top surface of the main piston (44).

2. Apparatus according to claim 1, wherein the piston rod (48) has through holes (48a) formed in a longitudinal direction and rod holes (48b) for connecting the through holes (48a) with the outside of the piston rod (48), the rod holes being separated from each other by a predetermined distance in the longitudinal direction.

3. Apparatus according to claim 1 or 2, further comprising:
a impact absorbing unit (60) disposed In the main cylinder (42) and formed below the main piston (44) to reduce the drop impact with respect to the control rod (2).

4. Apparatus according to claim 3, wherein the impact absorbing unit (60) comprises:
a impact absorbing cylinder (62) disposed inside the main cylinder (42), penetrated by the piston rod (48), having a discharge hole (62d) communicating with the outside at one side thereof, and adapted to move up and down with respect to the piston rod (48);
an impact-absorbing piston (64) disposed inside the impact absorbing cylinder (62) and mounted on the piston rod (48); and
an elastic member (66) installed between the impact absorbing piston (64) and a projection (67) formed at an inner bottom surface of the impact absorbing cylinder (62) to provide an upward elastic force with respect to the impact absorbing piston (64).

5. Apparatus according to claim 4, wherein the impact absorbing unit further comprises a cylinder liner (65) installed to cover an inner surface of the impact absorbing cylinder (62), and
the cylinder liner (65) is tapered so that it has a wider upper portion and a narrower-lower portion.

6. Apparatus according to claim 4 or 5, wherein an impact absorbing pad is installed at the inner bottom surface of the main cylinder.

## Patentansprüche

1. Vorrichtung zur Fallaufprallabsorption eines Steuerstabes eines Kernreaktors, wobei die Vorrichtung Folgendes umfasst:
einen unbeweglichen Rahmen (10), der dafür eingerichtet ist, an einer Oberseite des Kerns des Kernreaktors angeordnet zu werden, und
eine Aufpralldämpfungseinrichtung (40), die an dem unbeweglichen Rahmen (10) installiert ist, um den Fallaufprall in Bezug auf einen Steuerstab (2), der an einem unteren Teil der Aufpralldämpfungseinrichtung (40) angebracht ist, während eines freien Falls des Steuerstabes (2), der in den Kern eines Nuklearreaktors eingesetzt werden soll, zu verringern, wobei die Aufpralldämpfungseinrichtung (40) Folgendes umfasst:
einen vertikalen Hauptzylinder (42), der an dem unbeweglichen Rahmen (10) befestigt ist und einen geöffneten oberen Abschnitt hat,
einen Hauptkolben (44), der innerhalb des Hauptzylinders (42) angeordnet und dafür eingerichtet ist, sich in Bezug auf den Hauptzylinder (42) nach oben und nach unten zu bewegen, und
eine Kolbenstange (48), die an dem Hauptkolben (44) befestigt ist und durch denselben hindurchgeht und einen unteren Teil (49) hat, an dem der Steuerstab (2) angebracht ist,
**dadurch gekennzeichnet, dass**
wenigstens ein Kolbenloch (44a) in dem Hauptkolben (44) in einer Umfangsrichtung geformt ist und
die Vorrichtung ferner ein Durchfluss-Regelungselement (46) umfasst, das ein Durchfluss-Regelungsloch (46a) hat, das dem Kolbenlockl (44a) entspricht, um das Öffnen und Schließen des Kolbenlochs (44a) zu regeln, wobei das Durchfluss-Regelungselement (46) drehbar mit einer oberen Fläche des Hauptkolbens (44) verbunden ist.

2. Vorrichtung nach Anspruch 1, wobei die Kolbenstange (48) Durchgangslöcher (48a), die in einer Längsrichtung geformt sind, und Stangenlöcher (48b) zum Verbinden der Durchgangslöcher (48a) mit der Außenseite der Kolbenstange (48) hat, wobei die Stangenlöcher durch einen vorbestimmten Abstand in der Längsrichtung voneinander getrennt sind.

3. Vorrichtung nach Anspruch 2, die ferner Folgendes umfasst:
eine Aufpralldämpfungseinheit (60), die in dem Hauptzylinder (42) angeordnet und unterhalb des Hauptkolbens (44) geformt ist, um den Fallaufprall in Bezug auf den Steuerstab (2) zu verringern.

4. Vorrichtung nach Anspruch 3, wobei die Aufpralldämpfungseinheit (60) Folgendes umfasst:
einen Aufpralldämpfungszylinder (62), der innerhalb des Hauptzylinders (42) angeordnet ist, durchdrungen durch die Kolbenstange (48), wobei er ein Ablassloch (62d) hat, das an einer Seite desselben mit der Außenseite in Verbindung steht, und dafür eingerichtet ist, sich in Bezug auf die Kolbenstange (48) nach oben und nach unten zu bewegen,
einen Aufpralldämpfungskolben (64), der innerhalb des Aufpralldämpfungszylinders (62) angeordnet und an der Kolbenstange (48) angebracht ist, und
ein elastisches Element (66), das zwischen dem Aufpralldämpfungskolben (64) und einem an einer inneren unteren Fläche des Aufpralldämpfungszylinders (62) geformten Vorsprung (67) installiert ist, um eine nach oben gerichtete elastische Kraft in Bezug auf den Aufpralldämpfungskolben (64) bereitzustellen.

5. Vorrichtung nach Anspruch 4, wobei die Aufpralldämpfungseinheit ferner eine Zylinderauskleidung (65) umfasst, die dafür installiert ist, eine Innenfläche des Aufpralldämpfungszylinders (62) abzudecken, und
wobei die Zylinderauskleidung (65) verjüngt ist, so dass sie einen weiteren oberen Abschnitt und einen engeren unteren Abschnitt hat.

6. Vorrichtung nach Anspruch 4 oder 5, wobei ein Aufpralldämpfungsglied an der inneren unteren Fläche des Hauptzylinders installiert ist.

## Revendications

1. Appareil pour l'absorption de chocs de chute d'une barre de commande d'un réacteur nucléaire, l'appareil comprenant :
un cadre fixe (10), adapté pour être agencé au niveau d'un côté supérieur du coeur du réacteur nucléaire ; et
un dispositif d'absorption des chocs (40), installé au niveau du cadre fixe (10), pour réduire le choc de la chute par rapport à une barre de commande (2) montée au niveau d'une partie inférieure du dispositif d'absorption des chocs (40) au cours d'une chute libre de la barre de commande (2) devant être insérée dans le coeur d'un réacteur nucléaire, le dispositif d'absorption des chocs (40) comprenant :
un cylindre vertical principal (42), fixé sur le cadre fixe (10) et comportant une partie supérieure ouverte ;
un piston principal (44), agencé à l'intérieur du cylindre principal (42) et adapté pour se déplacer vers le haut et vers le bas par rapport au cylindre principal (42) ; et
une tige de piston (48) fixée sur le piston principal (44) et traversant celui-ci, et comportant une partie inférieure (49) au niveau de laquelle est montée la barre de commande (2) ;
**caractérisé en ce que**
au moins un trou de piston (44a) est formé dans le piston principal (44), dans une direction circonférentielle ; et
l'appareil comprend en outre un élément de régulation de débit (46), comportant un trou de régulation du débit (46a) correspondant au trou du piston (44a), en vue de contrôler l'ouverture et la fermeture du trou du piston (44a), ledit élément de régulation du débit (46) étant connecté de manière rotative à une surface supérieure du piston principal (44).

2. Appareil selon la revendication 1, dans lequel la tige de piston (48) comporte des trous de passage (48a) formés dans une direction longitudinale, et des trous de tige (48b) pour connecter les trous de passage (48a) à l'extérieur de la tige de piston (48), les trous de la tige étant séparés les uns des autres d'une distance prédéterminée dans la direction longitudinale.

3. Appareil selon les revendications 1 ou 2, comprenant en outre :
une unité d'absorption des chocs (60), agencée dans le cylindre principal (42) et formée au-dessous du piston principal (44) pour réduire le choc de la chute par rapport à la barre de commande (2).

4. Appareil selon la revendication 3, dans lequel l'unité d'absorption des chocs (60) comprend :
un cylindre d'absorption des chocs (62), agencé à l'intérieur du cylindre principal (42), pénétré par la tige de piston (48), comportant un trou de décharge (62d) communiquant avec l'extérieur au niveau d'un des ses côtés, et adapté pour se déplacer vers le haut et vers le bas par rapport à la tige de piston (48) ;
un piston d'absorption des chocs (64), agencé à l'intérieur du cylindre d'absorption des chocs (62) et monté sur la tige de piston (48) ; et
un élément élastique (66), installé entre le piston d'absorption des chocs (64) et une saillie (67) formée au niveau d'une surface inférieure interne du cylindre d'absorption des chocs (62), pour exercer une force élastique ascendante par rapport au piston d'absorption des chocs (64).

5. Appareil selon la revendication 4, dans lequel l'unité d'absorption des chocs comprend en outre une chemise de cylindre (65) installée de sorte à couvrir une surface interne du cylindre d'absorption des chocs (62) ; et
la chemise du cylindre (65) étant effilée, de sorte à comporter une partie supérieure plus large et une partie inférieure plus étroite.

6. Appareil selon les revendications 4 ou 5, dans lequel un patin d'absorption des chocs est installé au niveau de la surface inférieure interne du cylindre principal.
